# EUROPEAN PATENT SPECIFICATION

(11) **EP 1 342 117 B1**
(45) Date of publication and mention of the grant of the patent: **13.08.2008**
(21) Application number: 01968241.8
(22) Date of filing: 29.08.2001
(51) Int. Cl.: G02B 6/36, G02B 6/46, G02B 6/44, G02B 6/42

(54) **APPARATUS AND METHOD TO VERTICALLY ROUTE AND CONNECT MULTIPLE OPTICAL FIBERS**
VERFAHREN UND VORRICHTUNG ZUR SENKRECHTEN FÜHRUNG UND VERBINDUNG VON MEHREREN OPTISCHEN FASERN
APPAREIL ET PROCEDE PERMETTANT D'ACHEMINER VERTICALEMENT ET DE CONNECTER PLUSIEURS FIBRES OPTIQUES

(30) Priority: 01.09.2000 US 654459; 28.11.2000 US 724829; 11.07.2001 US 904163
(43) Date of publication of application: 10.09.2003
(73) Proprietor: Lightwave Microsystems Corporation, San Jose, CA 95134 (US)
(72) Inventor: FONTECHA, Edwin, San Jose, CA 95136 (US); KHAN, Mohammad, Zubair, San Jose, CA 95127 (US)
(74) Representative: Price, Nigel John King
(86) International application number: PCT/US2001/026929
(87) International publication number: WO 2002/019003

(56) References cited:
- EP-A- 0 690 322
- EP-A- 0 860 721
- FR-A- 2 745 431
- US-A- 4 346 294
- US-A- 5 064 268
- US-A- 5 420 954
- US-A- 5 742 982
- PATENT ABSTRACTS OF JAPAN vol. 005, no. 146 (P-080), 16 September 1981 (1981-09-16) & JP 56 080012 A (NIPPON TELEGR & TELEPH CORP), 1 July 1981 (1981-07-01)
- PATENT ABSTRACTS OF JAPAN vol. 2000, no. 11, 3 January 2001 (2001-01-03) & JP 2000 227532 A (NIPPON TELEGR &TELEPH CORP <NTT>), 15 August 2000 (2000-08-15)
- PATENT ABSTRACTS OF JAPAN vol. 2000, no. 11, 3 January 2001 (2001-01-03) & JP 2000 227530 A (NIPPON TELEGR &TELEPH CORP <NTT>), 15 August 2000 (2000-08-15)

## Description

This invention relates generally to an apparatus and method to physically pass multiple optical fibers (e.g., a ribbon) through the walls of a package (e.g., a rectangular enclosure), and more specifically to an apparatus and method to route and physically connect a ribbon of optical fibers through a wall of a package such that the plane of the ribbon is perpendicular to a mounting surface of the package or to a plane of a component to which the ribbon is connected.
The abstract of JP 56-80012 and US 5,420,954 disclose the pre-characterising portion of claim 1.

In many optical and electro-optical systems (e.g., computer systems, programmable electronic systems, telecommunication switching systems, control systems, and so forth) the reliable physical passing of multiple optical fibers through the walls of a package (e.g., a rectangular enclosure with one or more components) is desired, where the fibers transition between the inside and outside of a package.

Such packages are typically populated with components that are disposed upon a plane. For instance, a planar waveguide circuit may be formed on the surface of a section of a silicon wafer, and this surface is the nominal plane of this optical component. The optical components are typically placed within the package so that the planes of the optical components are parallel to the larger-area top and bottom sides of the package, and the components are spaced away from the sides along the height of the package.

One solution for physically routing one or more optical fibers through a wall of a package is to bundle the optical fibers into a cable, e.g., conventionally manufactured lines having a diameter, and route the optical fiber cable through a package wall opening. Another solution for physically routing one or more optical fibers through a wall of a package is to bundle the optical fibers into flat ribbons, and route the flat ribbons through package wall openings in a horizontal orientation. The ribbon orientation is considered to be horizontal if the plane of the ribbon is parallel to the planar waveguide circuit inside the package enclosure.

Additionally, for a typical installation of fiber optic-connected component in such a package, the fibers must be bent in order to connect to other components in the installation. In practice, fiber ribbons are bent only out of the plane of the ribbon. The other components are typically displaced primarily in the plane parallel to the bottom of the package, and it is desirable to route the fibers nominally in that same plane. For a ribbon of optical fibers in a horizontal orientation, the ribbon must frequently be twisted 90 degrees in orientation to rotate the plane of the fibers perpendicular to the plane of the installation. This rotation will then provide the desired ability to physically route the ribbon parallel to the plane of the installation. A very tightly twisted ribbon puts extra stress on the optical fibers and the connection points of the optical fibers. There are physical limitations on how tightly the ribbon can be twisted and how small the bend radius of curvature of the ribbon can be, since twists and bends increase the optical loss along the length of the optical fibers. Bends and twists typically require several millimeters to a few centimeters of fiber length to assure low loss and acceptably low stress. These limitations on the ribbon twisting and bending can also increase the clearance required for the package in the system, and increase the spacing between packages in a system.

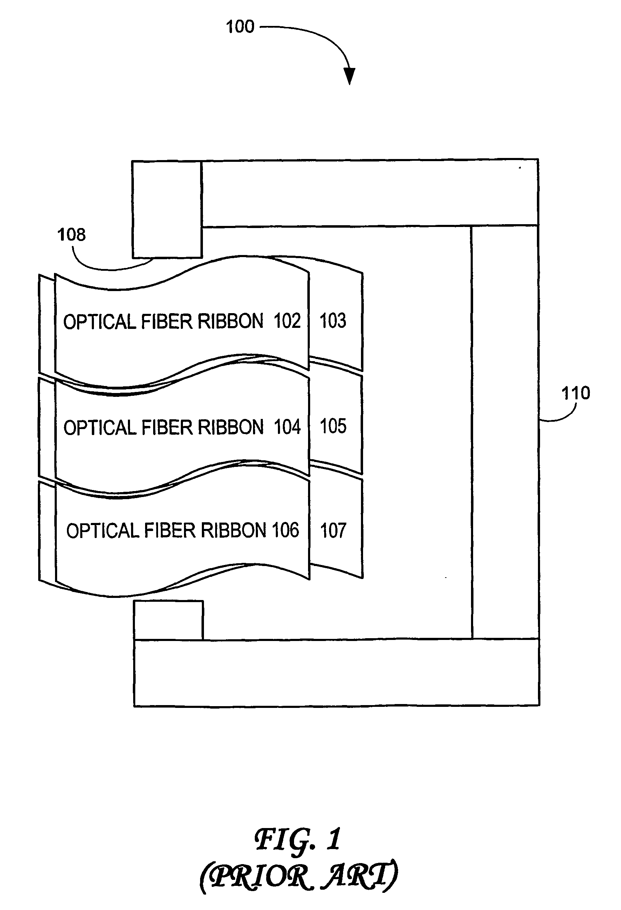

FIG. 1 illustrates a top view of a prior art approach for routing optical fibers through a wall of a package in an optical system **100.** Optical system **100,** as shown in this example, includes six horizontally oriented optical fiber ribbons **102, 103, 104, 105, 106,** and **107** routed through the wall **108** of a package **110.** Here, the wall **108** must be wide enough for the entry of the three top optical fiber ribbons **102, 104,** and **106,** and the three bottom optical fiber ribbons **103, 105,** and **107.** Additional optical fiber ribbons would require a package **110** with a wider wall **108.**

It would be desirable to physically route multiple optical fibers in a bundled (e.g., ribbon) configuration through a wall of a package, with a reduction in package size. It would also be desirable to provide an apparatus and method to reduce the stress on optical fibers by reducing the twisting of an optical fiber ribbon physically connected to an external system.
The invention is defined in the independent claims, 1 and 22. Preferred embodiments are defined in the dependent claims.

An apparatus and method to vertically route and physically pass multiple optical fibers through the walls of a package, e.g., an optical package, is described herein. The method to route an optical fiber ribbon through a wall of a package comprises routing the ribbon such that the width of the optical fiber ribbon is secured perpendicularly to a component within the package to which the ribbon is attached.

Where the ribbon may be routed through an opening in the wall, the orientation of the ribbon may be such that the fibers of the ribbon may optimally exit the package to provide a minimal bend radius of the ribbon, thereby preferably providing an apparatus and method to reduce the stress on the fibers by reducing the twisting of the ribbon. The ribbon of optical fibers routed through the wall of a package may also be secured by, e.g., a clamp, along a width of the ribbon.

The ribbon may be looped and oriented within the package such that the end of the ribbon not attached to the component becomes oriented vertically, i.e., perpendicularly, in relation to a plane defined by a component which may be disposed within the package and to which the opposite end of the ribbon is attached. Moreover, where the plane of the component is parallel to the mounting base, vertical may be taken as the direction perpendicular to the plane of the mounting base of the package. As further defined herein, the term "vertically" shall be used to describe an orientation as being perpendicular to the plane defined by a component within the package, unless otherwise noted. Likewise, the term "horizontally" shall be used to describe an orientation as being parallel to the plane defined by the component which may be disposed within the package, or parallel to the mounting base of the package when parallel to the plane of the component, also unless otherwise noted.

The invention, together with its various features and advantages, can be readily understood from the following more detailed description taken in conjunction with the accompanying figures, in which the figures are schematic and have not been drawn to scale in the interest of clarity.

FIG. 1 illustrates a top-down view of a prior art approach for routing optical fibers through a wall of a package in an optical system.

FIG. 2 illustrates a top-down view comparison of a package having a horizontal optical fiber ribbon (bottom package) and a package having a vertical optical fiber ribbon passing through and bending (top package).

FIG. 3 illustrates a perspective side view of one preferred embodiment of the invention, showing a ribbon of optical fibers with a ribbon segment vertically routed through a package wall opening.

FIG. 4 illustrates a perspective view of another preferred embodiment of the invention, showing the ribbon of optical fibers with the ribbon segment vertically routed through the package wall opening. In this variation, the ribbon segment may be attached and sealed to the package wall opening by adhesive depositions.

FIG. 5A illustrates a top-down (edge-on) view of a ribbon of one preferable variation having a reinforcement plate attached to a ribbon segment of a ribbon of optical fibers.

FIG. 5B illustrates an isometric view of the section from FIG. 5A with only the ribbon and reinforcement plate shown for clarity.

FIG. 6A illustrates an isometric view of a package having a component disposed within and a ribbon oriented vertically in relation to the component. The lid is not shown for clarity.

FIG. 6B illustrates a top view of the package of FIG. 6A showing the orientation of the ribbon in relation to the component.

FIG. 7 shows a flow chart of a variation for vertically routing a segment of optical ribbon through a package wall opening.

FIG. 8 shows a flow chart of a variation for sealing a segment of optical fiber ribbon vertically routed through a package wall opening.

FIG. 9 shows a flow chart of another variation for sealing a segment of optical fiber ribbon, vertically routed through a package wall opening.

FIG. 10 shows a flow chart of a variation for hermetically sealing a segment of optical fiber ribbon, physically supported by a reinforcement plate, and vertically routed through a package wall opening.

This invention provides an apparatus and method to pass a ribbon of optical fibers or a similar cable through a wall of a package such that the fibers of the ribbon or cable may optimally exit the package to provide a minimal bend radius to the ribbon or cable. The invention also provides an apparatus and method for securing the optical ribbon or cable to the package in this desired orientation. A preferable variation may route multiple optical fibers in a planar cable (i.e., a ribbon) through a package wall opening that is some distance from the connection of the optical fibers to a component inside the package. The width is defined as the overall distance formed from each of the cross-sections of the juxtaposed individual fibers along one direction and the thickness is defined as the distance perpendicular to the width.

A package may comprise a variety of shapes and may typically be rectangular. The package may have a mounting base which is usually mounted upon and contacting some surface depending upon the environment and configuration of the system into which the package may be placed. The base of the enclosure is defined as that part of the enclosure which may be secured or placed in contact with a mounting surface. Within the package, various components, e.g., a planar waveguide circuit formed on the surface of a section of a silicon wafer, are usually mounted such that the plane of the optical components may be parallel with the mounting base or mounting surface upon which the package is placed. A ribbon optically connected to such a component is typically parallel with the plane of the component. The end of the ribbon not attached to the component may be looped and oriented within the package such that the ribbon becomes oriented at an angle, i.e., vertically, in relation to a plane defined by a component which may be disposed within the package. The angle formed is preferably about 90° or perpendicular. This relationship may hold regardless of how many twists the ribbon may endure so long as the end of the ribbon connected to the component and the end of the ribbon exiting the package maintain their perpendicular relationship.

Moreover, where the plane of the component is parallel to the mounting base, vertical may be taken as perpendicular to the mounting base of the package. As further defined herein, the term "vertically" shall be used to describe an orientation as being perpendicular to the plane defined by a component which may be disposed within the package, unless otherwise noted. Likewise, the term "horizontally" shall be used describe an orientation as being parallel to the plane defined by the component which may be disposed within the package, or parallel to the mounting base of the package if parallel to the plane of the component, also unless otherwise noted.

Alternatively, if a component were mounted such that the plane of the component were perpendicular to the mounting base of the package and the mounting surface, the connected ribbon may be looped and oriented such that the plane of the ribbon still exits the package vertically, i.e., perpendicular to the mounting base or mounting surface, despite the orientation of the component within the package.

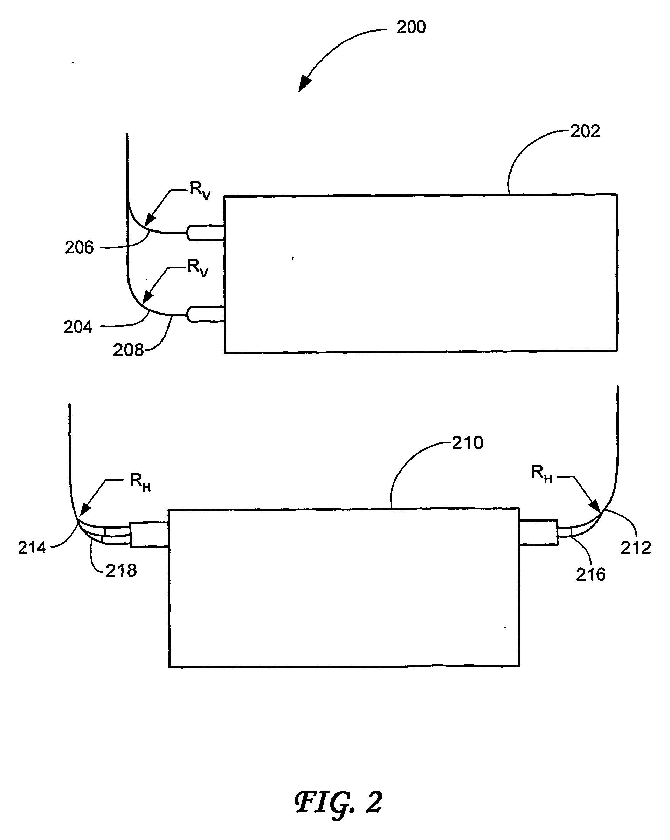

FIG. 2 illustrates a top-down view comparison **200** of a variation on a package **202** having a vertically-routed, i.e., preferably perpendicular to the mounting surface or mounting base, input fiber ribbon 204 and output fiber ribbon **206.** As vertically-routed fiber ribbons 204, 206 bend, they typically form a bend radius, R_{V}. An example of such a bend radius, R_{V}, for a typical ribbon may be about 1.0 in. (25.4 mm). For comparison purposes, a top-down view of conventional package **210** is shown having a conventional horizontally routed, i.e., parallel to the mounting surface or mounting base, input fiber ribbon **212** and output fiber ribbon **214.**

As conventionally-routed ribbons **212, 214** bend, they may also typically form a bend radius, R_{H}. An example of such a bend radius, R_{H}, for a typical ribbon may be about 1.0 in. (25.4 mm). Bend radius, R_{H}, is shown in the figures as being outside the packages to illustrate some of the desirable results, e.g., less space required for connecting different packages together, of vertically routing the ribbon as compared to conventional methods. As seen, conventionally routed ribbons **212, 214** may require a longer length of non-bending fiber **216, 218** than a length of non-bending fiber **208** for the vertically routed ribbon. An example of a typical length of non-bending fiber **216, 218** may about 0.25 to 0.5 in. (6.35 to 12.7 mm) whereas an example of a length of non-bending fiber **208** for the vertically routed ribbon may be about 0.1 in. (2.54 mm). Here, both vertically-routed fiber ribbons **204, 206** and conventionally routed ribbons **212, 214** may be routed to another package (not shown) and externally connected in a vertical orientation. An overall result is that conventionally routed ribbons **212, 214** requiring a considerably larger amount of space to twist and bend compared to vertically-routed fiber ribbons **204, 206.** A smaller amount of space for optical fiber ribbon bending is desirable for permitting the fabrication of a more compact and lower cost system.

Another advantage of the present invention can be seen in FIG. 2 in that vertically routing the ribbon may allow vertically-routed ribbons **204, 206** to enter and exit the same side of the package **202** due to the efficient vertical routing within package **202.** On the other hand, conventional methods of routing may require an input ribbon **212** on one side of package **210** and an output ribbon **214** on an opposite side of package **210** due to the required additional space necessary to route and connect the ribbon within package **210.** As clearly seen, access to package **202** from a single side may allow for efficient placement and connection of package **202** to other packages as well as overall space savings and compact design.

Physical clamping and reinforcement may be facilitated by the extension of optical fibers through a wall of a package. The optical fiber ribbon may be clamped on the outside of the package wall opening and/or on the inside of the package wall opening by a reinforcement support. In one variation, the optical fibers may be routed through a package wall opening and may be physically reinforced in a vertical orientation. Reinforcement may be provided by a vertical clamp (e.g., flat-faced or curved) with the face or face tangent parallel to the plane of the ribbon. The face tangent is taken to be the tangential portion of the curved face of the clamp which is parallel to the plane of the ribbon to which the clamp is securing. Preferably, the clamp may have a surface with a compliant material disposed thereon (e.g., a self-adhesive semi-rigid rubber strip). One preferred semi-rigid rubber strip may be approximately 30 mils (approximately 0.08 centimeters) thick with a durometer hardness of Shore A30, and may be commercially available from McMaster-Carr Supply Company, with corporate headquarters located in Los Angeles, California. Other variations may use other equivalent compliant materials, with or without adhesive, having a durometer hardness greater or smaller than Shore A 30, and a greater or lesser thickness than approximately 30 mils (0.08 cm).

Other variations may provide a feedthrough or conduit, e.g., made from an aluminum alloy, other metals, or other strong materials, attached externally to the package wall opening to function as a gasket for the fiber feedthrough. This gasket may be used to provide physical support, and may help to transfer to the package external stresses induced on the fibers. The gasket in one preferred embodiment may be back-filled with an adhesive around the fibers to further seal the feedthrough volume. In another variation, a protective boot, i.e., an external covering around the fiber-to-package junction, preferably made from synthetic rubber, e.g., santoprene, neoprene, ethylene propylene diene monomer (EPDM), or other equivalent thermoset or thermoplastic polymeric materials, may cover the hard gasket providing an extended, composite gasket. The composite gasket may provide additional compliant physical support to the optical fibers.

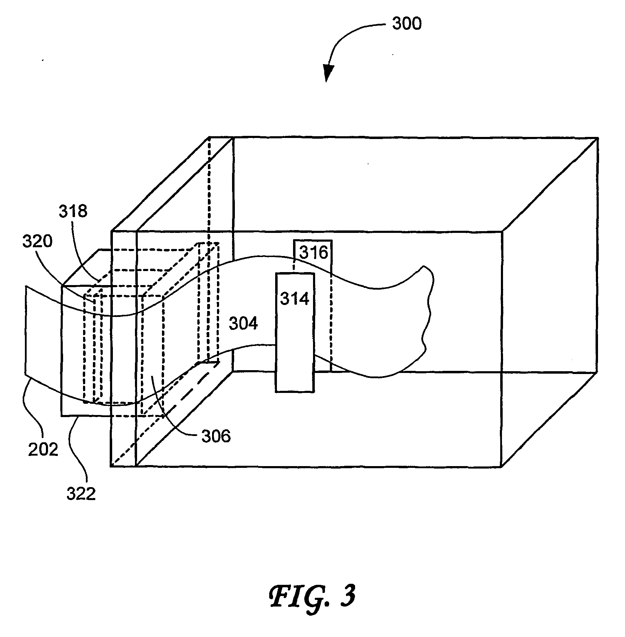

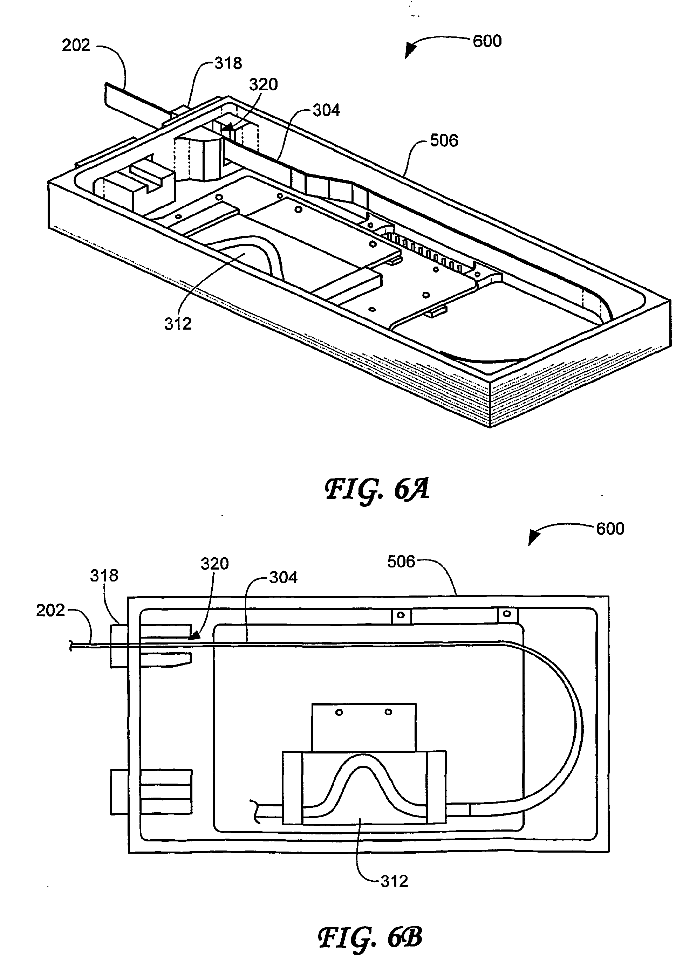

FIG. 3 illustrates a perspective view of one variation, showing a ribbon **202** of optical fibers with a ribbon segment **304** vertically routed through a package wall opening **306** to a component **312** (seen in FIG. 6). In this variation, the vertical clamps **314** and **316** may clamp either or both sides of the ribbon segment **304.** The vertical clamps **314** and **316** are preferably made from an aluminum alloy, but can be made from other metals, polymers, or rubber in other variations. The external feedthrough or conduit **318,** as described above, may be externally attached over the package wall opening **306** and may provide physical support to the optical fiber ribbon **202.** The external feedthrough **318** is preferably comprised of a material such as an aluminum alloy, but can be fabricated from other metals or rigid materials in alternative variations. The external feedthrough **318** preferably extends about 250 to 500 mils (0.635 to 1.27 cm) beyond the outer wall of the package wall opening **306.** Alternative variations can use a shorter or longer external feedthrough **318.** In this preferable variation, a tight-fitting protective boot **322** made of a compliant material may cover the external feedthrough **318.**

A gap may exist between the package wall opening and the optical fibers that may be routed through the opening. The gap may be filled with various low viscosity adhesives, e.g., various epoxy adhesives, silicone rubber adhesives, and so forth, in a preferable variation. The feedthrough cavity may be filled with various soft adhesives, e.g., various epoxy adhesives, silicone rubber adhesives, and so forth, or hard adhesives, e.g., anhydride epoxy adhesives, and so forth, for physical support for the ribbon and improved moisture-resistance for the package in more preferred variations.

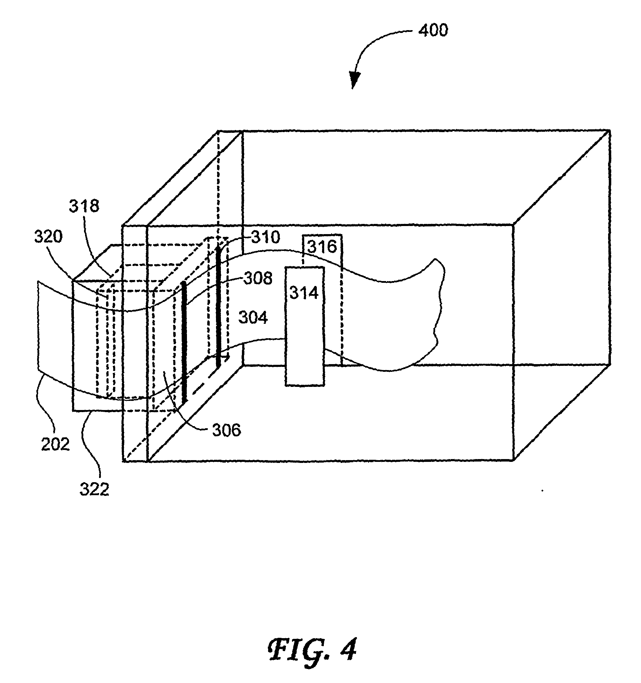

FIG. 4 illustrates a perspective view of another preferable variation showing ribbon 202 of optical fibers with ribbon segment **304** vertically routed through package wall opening **306** to component **312** (as seen FIG. 6). In this variation, the ribbon segment **304** may be attached and sealed to the package wall opening **306** by adhesive depositions **308** and **310,** e.g., epoxy or silicone rubber, which may fill the entire package wall opening **306.** Vertical clamps **314** and **316** may clamp the ribbon segment **304.** The ribbon **202** may be routed through external feedthrough **318,** which may be attached to the outer wall of the package wall opening **306.** In this preferable variation, a soft or hard epoxy adhesive, or a silicone rubber adhesive may seal the external feedthrough cavity **320.** In this preferable variation, a tight-fitting protective boot **322** made of a compliant material may cover the external feedthrough **318.**

The package wall openings through which optical fibers are routed from the interior of the package to the exterior of the package can be hermetically sealed by deposition of a solder. If a solder is used to hermetically seal a package wall opening, the most preferred solder is an Indium or Indium-alloy solder. Indium and Indium-alloy solders are available from Indium Corporation of America, with corporate headquarters located in Utica, New York. Indium and Indium-alloy solders are also available from Arconium, with corporate headquarters located in Providence, Rhode Island.

In another preferable variation using a solder sealant, e.g., various alloys of Indium solder, for hermetic sealing, the optical fibers cables may be routed through a package wall opening vertically and may also be physically reinforced in a lateral direction by a reinforcement plate extending through the package wall opening, attached to the ribbon of optical fibers and the package wall opening by a solder, as discussed in more detail by co-pending U.S. Patent Application Serial No. 09/654,459, entitled "Apparatus and Method to Metallize, Reinforce, and Hermetically Seal Multiple Optical Fibers" filed on September 1, 2000. It is also discussed in further detail in the co-pending U.S. Patent Application also entitled "Apparatus and Method to Metallize, Reinforce, and Hermetically Seal Multiple Optical Fibers", which was filed on June 21, 2001 as a continuation-in-part application of 09/654,459.

One preferable variation of the invention may use 99.99% pure Indium solder to coat the reinforcement plate and seal optical fibers to each package wall opening. However, alternative variations of the invention may use 99.9% pure Indium, 99% Indium, various alloys of Indium (including Lead, Silver, or Palladium), or even alternative low temperature solder alloys of Bismuth, Lead, or Tin. Another preferred variation may use 80% Indium, 15% Lead, and 5% Silver solder to coat the reinforcement plate and seal optical fibers to each package wall opening. Another preferred variation may use 97% Indium and 3% Silver solder to coat the reinforcement plate and seal optical fibers to each package wall opening. A less preferred variation may use 95% Indium and 5% Bismuth solder.

Most preferably, the solder may be protected from moisture-induced corrosion by an outer covering of water-resistant epoxy, e.g., anhydride epoxy, in the feedthrough cavity, as described further in U.S. Patent Application Serial No. 09/654,459. The most preferred variation may use anhydride epoxy for the outermost adhesive in the feedthrough cavity. A preferred epoxy is available from Dexter, with corporate headquarters located in City of Industry, California; Namics, with corporate headquarters located in Tokyo, Japan; and Ablestik, with corporate headquarters located in Rancho Domingues, California. Alternative variations may use other types of adhesives besides epoxy, e.g., silicone rubber compounds, polymer adhesives, and equivalents. The preferred adhesive is a thermally cured adhesive, but alternative variations may use an adhesive cured by ultraviolet light. A preferred epoxy dispenser is available from EFD Dispenser, with corporate headquarters located in East Providence, Rhode Island. However, other epoxy dispensers are available from other suppliers to dispense epoxy to implement the invention.

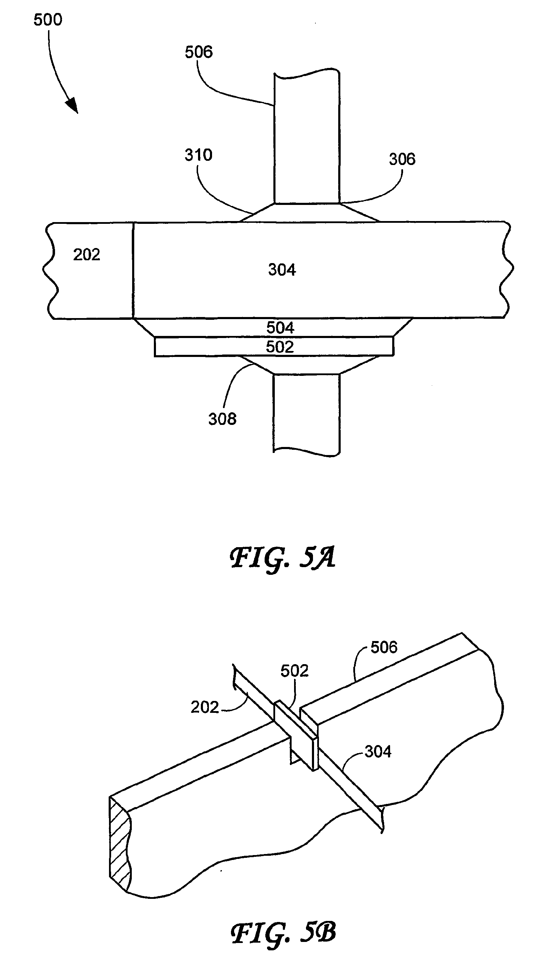

FIG. 5A illustrates a cross-sectioned top view **500** of one preferable variation with a reinforcement plate **502** attached to a vertically-routed ribbon segment **304** (seen as a top edge-view) of a ribbon **202** of optical fibers. FIG. 5B illustrates an isometric view of the section of FIG. 5A with only the ribbon **304** and reinforcement plate **502** shown for clarity. The ribbon segment **304** may be attached to the reinforcement plate **502** by solder deposit **504** for lateral support. The reinforcement plate **502** may also extend through the package wall opening **306.** The reinforcement plate **502** preferably extends about 10 to 150 mils (0.0254 to 0.381 cm) outside the outer wall of the package **506.** Alternative variations of the invention may make the reinforcement plate **502** extend about 50 to 250 mils (0.127 to 0.635 cm), or more than about 250 mils (0.635 cm), beyond the outer wall of the package **506.** The ribbon segment **304** may be attached and sealed to the package **506** by solder depositions **308** and **310.** A process for reinforcing and routing through opening **306** is described further in U.S. Patent Application Serial No. 09/654,459.

FIG. 6A shows an isometric view of an example of a package **506** (with the lid removed for clarity) with ribbon **202** routed through feedthrough cavity **320** of external feedthrough **318.** As shown, component **312** may be placed in package **506** such that the plane of component **312** may be parallel with the mounting surface. Accordingly, ribbon **304** may be looped and routed from component **312** such that it exits package **506** vertically, as seen with ribbon **202.** The term "vertically" is defined as above. FIG. 6B shows a top view of the package **506** of FIG. 6A. As seen, the portion of ribbon **304** which is attached to component **312** is parallel with the component plane and as the remaining portion or segment of ribbon **304** is looped within package **506,** ribbon **304** is preferably oriented vertically relative to the plane defined by component **312** as it leaves package **506.**

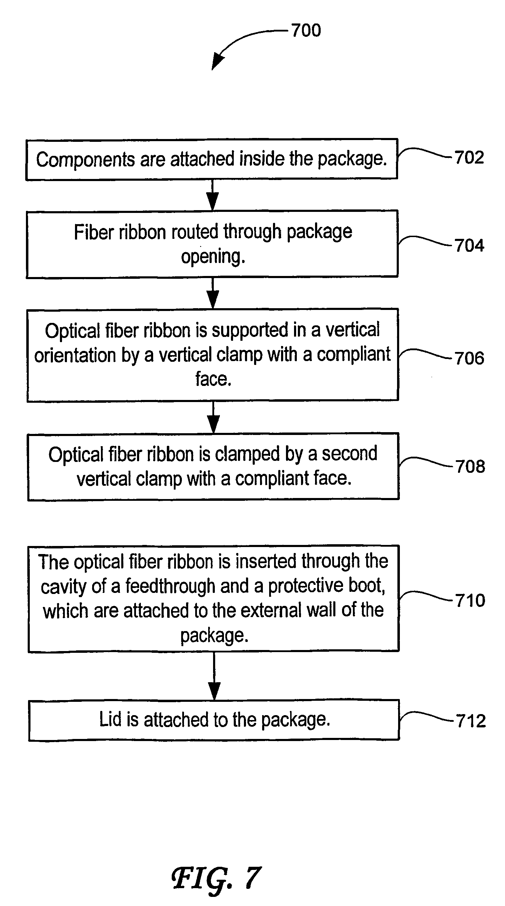

FIG. 7 shows a flow chart **700** for one variation on vertically routing a segment of optical ribbon through a package wall opening. Starting in operation **702,** components may be placed and attached inside a package. Operation **704** may follow, where an optical fiber ribbon may be routed through a package wall opening. Operation **706** may follow, where the optical fiber ribbon may be supported in a vertical orientation by, e.g., one flat-faced clamp covered by a compliant semi-rigid rubber strip. Operation **708** may follow, where, e.g., a second flat-faced clamp covered by a compliant semi-rigid rubber strip may be vertically clamped over the opposite side of the optical fiber ribbon and attached to the package body, e.g., by screws. Operation **710** may follow, where the optical fiber ribbon may be inserted through the cavity of a feedthrough and a protective boot, which may be attached to the external wall of the package. Operation **712** may follow, where the lid may be attached to the package.

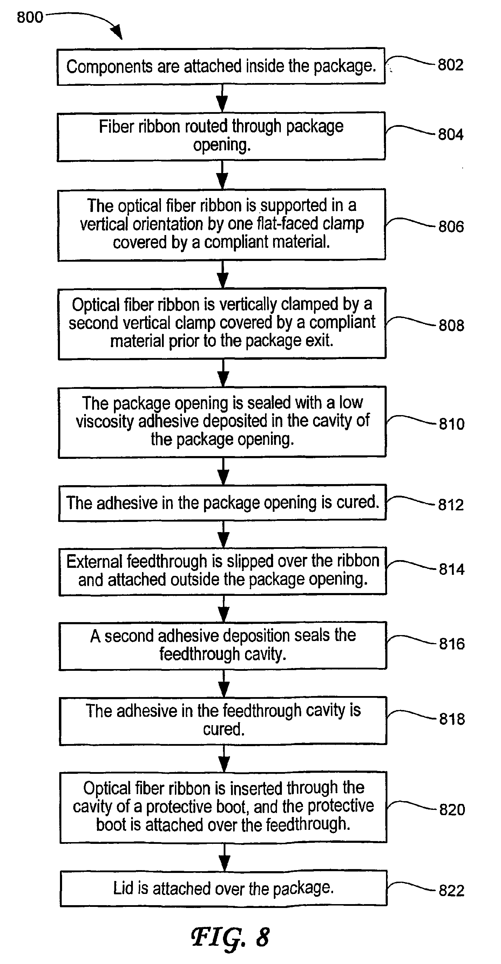

FIG. 8 shows a flow chart **800** for another variation on sealing a segment of optical ribbon vertically routed through a package wall opening. Starting in operation **802,** components may be placed and attached inside the package. Operation **804** may follow, where an optical fiber ribbon may be routed through a package wall opening. Operation **806** may follow, where the optical fiber ribbon may be supported in a vertical orientation by, e.g., one flat-faced clamp covered by a compliant semi-rigid rubber strip. Operation **808** may follow, where, e.g., a second flat-faced clamp covered by a compliant semi-rigid rubber strip is vertically clamped over the opposite side of the optical fiber ribbon and attached inside the package body, e.g., by screws, prior to the exit of the optical fiber ribbon from the package. Operation **810** may follow, where a low viscosity adhesive may be deposited in the cavity of the package wall opening to seal it. Operation **812** may follow, where the adhesive may be cured, e.g., thermally or by other methods. Operation **814** may follow, where the optical fiber ribbon may be inserted through the cavity of a feedthrough, which may then be attached to the external wall of the package. Operation **816** may follow, where a second adhesive deposition may seal the feedthrough cavity. Operation **818** may follow, where the second adhesive may be cured, e.g., thermally or by other methods. Operation **820** may follow, where the optical fiber ribbon may be inserted through the cavity of a protective boot, which may then be attached over the feedthrough. After all the package wall openings are sealed in this manner, operation **822** may follow, where a lid may be attached to the package.

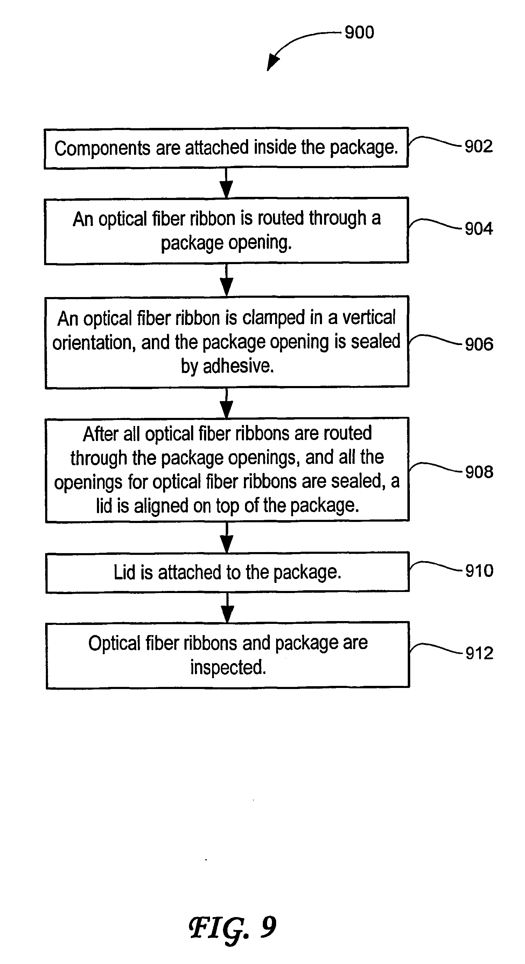

FIG. 9 shows a flow chart **900** for another variation on sealing a segment of optical fiber ribbon, vertically routed through a package wall opening. Operation **902** may begin where the components may be placed and attached inside the package. Operation **904** may follow, where a segment of an optical fiber ribbon may be routed through a package wall opening. Operation **906** may follow, where the optical fiber ribbon may be clamped in a vertical orientation, and an adhesive may be used to seal the package wall opening. After all the package wall openings are sealed in this manner, operation **908** may follow, where a lid may be aligned on the package. Operation **910** may follow, where the lid may be attached to the package. Operation **912** may follow, where the optical fiber ribbon and the package may then be inspected.

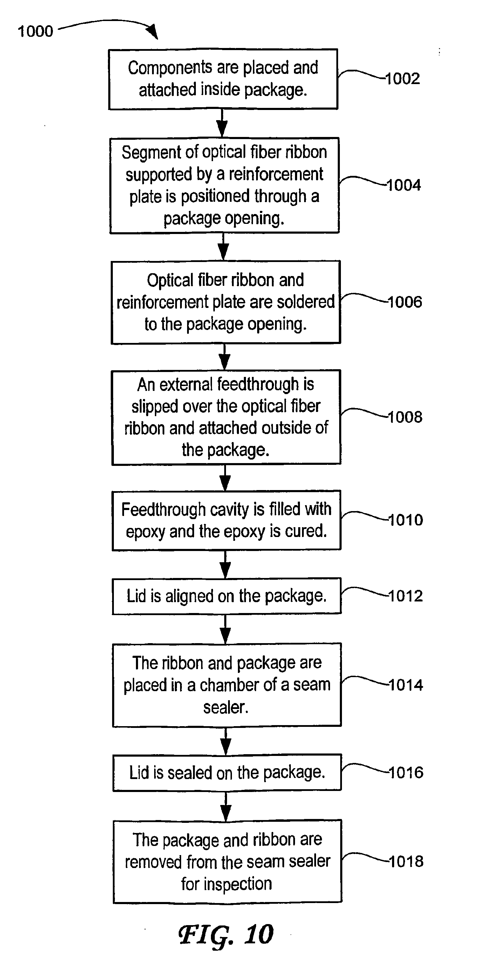

FIG. 10 shows a flow chart **1000** for a variation on hermetically sealing a segment of optical fiber ribbon, physically supported by a reinforcement plate, and vertically routed through a package wall opening. Operation **1002** may begin where the components may be placed and attached inside the package. Operation **1004** may follow, where a segment of optical fiber ribbon supported by a reinforcement plate may be positioned through a package wall opening such that the reinforcement plate extends outside the package, most preferably by about 10 to 150 mils (0.0254 to 0.381 cm). Operation **1006** may follow, where the optical fiber ribbon and reinforcement plate may be soldered to the package wall opening. Operation **1008** may follow, where an external feedthrough may be slipped over the optical fiber ribbon and attached outside of the package. Operation **1010** may follow, where the feedthrough cavity may be filled with epoxy and the epoxy may be cured. After all the package wall openings are sealed in this manner, operation **1012** may follow, where a lid of low coefficient of thermal expansion material, e.g., Kovar, Invar, Alloy 42, or other low coefficient of thermal expansion alloys, may be aligned on the package. Operation **1014** may follow, where the ribbon and the package may be placed in a chamber of a seam sealer for a time ranging from about 30 minutes to 8 hours to seam seal the package. Operation **1016** may follow, where the lid may be sealed on the package. The seam sealer may use two electrodes that melt the lid in localized areas and seal the package. In the most preferred variation, sealing may take place in a dry box containing about 90% nitrogen and 10% helium. Helium may be used so that parts may be tested for fine leaks without having to pressurize them with helium after sealing. Operation **1018** may follow, where the optical fiber ribbon and package may be removed from the seam sealer. A further description may be found in the U.S. Patent Applications, as discussed above.

Descriptions of specific designs and dimensions are provided only as examples. It is to be understood that modifications to the variations will be readily apparent to those skilled in the art. Thus, while preferred variations of the invention have been disclosed, it will be readily apparent to those skilled in the art that the invention is not limited to the disclosed variations but is intended to cover numerous other modifications and broad equivalent arrangements that are included within the scope of the following claims.

## Claims

1. An optical package (600) having a length of optical fibers (202) connected to the package, comprising:
an enclosure (506) having at least one optical component (312) disposed therein, the component (312) defining a plane and being optically connected to the length of optical fibers (202);
an opening (320) defined by at least one wall of the enclosure,
wherein the optical fibers (202) are grouped as a ribbon (304) having a width greater than a thickness, and a segment of the length of ribbon is disposed within the opening (320) such that a plane defined by the width of the segment of the ribbon (304) is substantially perpendicular to the plane defined by the component (312); **characterised in that:**
the wall defines a plane that is substantially perpendicular to the plane defined by the optical component (312).

2. The package of claim 1 wherein the enclosure comprises a mounting base which defines a plane such that the plane defined by the segment is perpendicular to the plane defined by the mounting base.

3. The package of claim 1 further comprising a support (314, 316) attached to the enclosure and configured to support the segment of the length.

4. The package of claim 3 wherein the support (314, 316) comprises a clamp having a clamping face which is parallel to the segment of the length.

5. The package of claim 4 wherein a shape of the clamping face is selected from the group consisting of flat surfaces and curved surfaces.

6. The package of claim 4 wherein the clamp further comprises a compliant material disposed upon the clamping face.

7. The package of claim 6 wherein the compliant material comprises rubber.

8. The package of claim 7 wherein the compliant material comprises a thickness of about 0.76 mm (0.030 in.).

9. The package of claim 1 further comprising a feedthrough (318) disposed within the opening and supporting the segment of the length.

10. The package of claim 9 wherein the feedthrough (318) comprises a material selected from the group consisting of aluminum, aluminum alloys, and other metals.

11. The package of claim 9 further comprising a protective boot (322) disposed over the feedthrough.

12. The package of claim 11 wherein the protective boot (322) comprises a polymer selected from the group consisting of thermoset and thermoplastic polymers.

13. The package of claim 11 wherein the protective boot (322) comprises a polymer selected from the group consisting of santoprene, neoprene, and ethylene propylene diene monomer.

14. The package of claim 1 further comprising a sealant disposed within a gap defined by the opening and the segment of the length.

15. The package of claim 14 wherein the sealant comprises an adhesive selected from the group consisting of anhydride epoxy, epoxy, silicone rubber, polymer adhesive, and solder.

16. The package of claim 1 further comprising a plate disposed within the opening and upon which the segment of the length is attached.

17. The package of claim 16 wherein the plate and the segment of the 17 length are soldered together.

18. The package of claim 1 wherein the segment of the length of optical fibers is disposed within the opening such that a non-bending length of the optical fibers exterior to the opening is minimized.

19. The package of claim 18 wherein a bending radius of the length of optical fibers exterior to the opening is about 25 mm (1.0 inch).

20. The package of claim 18 wherein the non-bending length of the optical fibers exterior to the opening is about 2.5 mm (0.1 inch).

21. The package of claim 1 wherein the length of optical fibers has a cross-section selected from the group consisting of ovals, ellipses, and rectangles.

22. A method of routing a length of optical fibers (202) through a wall of a package (600) comprising:
providing at least one optical component (312) disposed within the package (600) to which an end of the length of optical fibers (202) is to be attached, the component (312) defining a plane, wherein the optical fibers are grouped as a ribbon (304) having a width greater than its thickness; and,
routing the length of optical fibers (202) through an opening (320) defined in a wall of the package such that a plane defined by the width of a segment of the length of ribbon (304) disposed within the opening (320) is substantially perpendicular to the plane defined by the component (312), **characterised in that** the wall of the package (600) is substantially perpendicular to the plane defined by the component (312).

23. The method of claim 22 further comprising securing the length of optical fibers to the package.

24. The method of claim 23 wherein securing the length of optical fibers to the package comprises clamping the length between at least two clamping members.

25. The method of claim 24 wherein the clamping members comprise a shape selected from the group consisting of flat surfaces and curved surfaces.

26. The method of claim 22 further comprising sealing a gap defined between the opening and the segment of the length.

27. The method of claim 26 wherein the gap is sealed with an adhesive selected from the group consisting of anhydride epoxy, epoxy, silicone rubber, polymer adhesive, and solder.

28. The method of claim 22 further comprising attaching the segment of the length to a reinforcement plate prior to routing the length of optical fibers through the opening.

29. The method of claim 28 wherein the reinforcement plate comprises a material selected from the group consisting of Kovar, Invar, and Alloy 42.

30. The method of claim 22 further comprising:
supporting the segment of the length with at least one feedthrough (318) disposed within the opening ; and
filling a cavity defined in the feedthrough with an adhesive.

31. The method of claim 30 further comprising curing the adhesive.

32. The method of claim 22 further comprising bending a portion of the length of optical fibers exterior to the opening such that the portion of the length between the bent portion and the opening is minimized.

33. The method of claim 32 wherein a bending radius of the bent portion is about 25 mm (1.0 inch).

34. The method of claim 32 wherein the length of the optical fibers between the bent portion and the opening is about 2.5 mm (0.1 inch).

35. The method of claim 22 wherein the length of optical fibers has a cross-section selected from the group consisting of ovals, ellipses, and rectangles.

## Patentansprüche

1. Optische Baugruppe (600), die einen Längenabschnitt von optischen Fasern (202) aufweist, der an die Baugruppe gekoppelt ist, mit
einem Gehäuse (506), das zumindest eine in ihm angeordnete optische Komponente (312) aufweist, welche Komponente (312) eine Ebene definiert und optisch an den Längenabschnitt der optischen Fasern (202) gekoppelt ist,
einer durch zumindest eine Wand des Gehäuses festgelegten Öffnung (320),
wobei die optischen Fasern (202) als ein Band (304), das eine Breite größer als eine Dicke aufweist, gruppiert sind, und ein Segment des Längenabschnitts des Bandes in der Öffnung (320) angeordnet ist, so dass eine durch die Breite des Segments des Bandes (304) definierte Ebene im Wesentlichen senkrecht zu der durch die Komponente (312) definierten Ebene ist, **dadurch gekennzeichnet, dass**
die Wand eine Ebene definiert, die im Wesentlichen senkrecht zu der durch die optische Komponente (312) definierten Ebene ist.

2. Baugruppe nach Anspruch 1, wobei das Gehäuse eine Montagesohle aufweist, die eine Ebene definiert, so dass die durch das Segment definierte Ebene senkrecht zu der durch die Montagesohle definierten Ebene ist.

3. Baugruppe nach Anspruch 1, ferner mit einer Halterung (314, 316), die an dem Gehäuse befestigt ist und zum Halten des Segments des Längenabschnitts konfiguriert ist.

4. Baugruppe nach Anspruch 3, wobei die Halterung (314, 316) eine Klemme mit einer Klemmfläche aufweist, die parallel zu dem Segment des Längenabschnitts ist.

5. Baugruppe nach Anspruch 4, wobei eine Form der Klemmfläche aus der Gruppe bestehend aus ebenen Oberflächen und gewölbten Oberflächen gewählt ist.

6. Baugruppe nach Anspruch 4, wobei die Klemme ferner ein auf der Klemmoberfläche angeordnetes nachgiebiges Material aufweist.

7. Baugruppe nach Anspruch 6, wobei das nachgiebige Material Gummi enthält.

8. Baugruppe nach Anspruch 7, wobei das nachgiebige Material eine Stärke von etwa 0,76 mm (0,030 Inch) aufweist.

9. Baugruppe nach Anspruch 1, ferner mit einer Durchführung (318), die innerhalb der Öffnung angeordnet ist und das Segment des Längenabschnitts hält.

10. Baugruppe nach Anspruch 9, wobei die Durchführung (318) ein Material aufweist, das aus der Gruppe bestehend aus Aluminium, Aluminiumlegierung oder anderen Metallen gewählt ist.

11. Baugruppe nach Anspruch 9, ferner mit einer über der Durchführung angeordneten Schutzmanschette (322).

12. Baugruppe nach Anspruch 11, wobei die Schutzmanschette (322) ein Polymer aufweist, das aus der Gruppe bestehend aus duroplastischen und thermoplastischen Polymeren gewählt ist.

13. Baugruppe nach Anspruch 11, wobei die Schutzmanschette (322) ein Polymer aufweist, das aus der Gruppe bestehend aus Santopren, Neopren und Ethylen-Propylen-Dien-Monomer gewählt ist.

14. Baugruppe nach Anspruch 1, ferner mit einer Abdichtung, die in einer durch die Öffnung und dem Segment des Längenabschnitts definierten Fuge angeordnet ist.

15. Baugruppe nach Anspruch 14, wobei die Abdichtung einen Klebstoff aufweist, der aus der Gruppe bestehend aus Anhydridepoxid, Epoxid, Silicongummi, Polymerklebstoff und Lötmittel gewählt ist.

16. Baugruppe nach Anspruch 1, ferner mit einer Platte, die innerhalb der Öffnung angeordnet ist und auf welcher das Segment des Längenabschnitts befestigt ist.

17. Baugruppe nach Anspruch 16, wobei die Platte und das Segment des Längenabschnitts zusammen verlötet sind.

18. Baugruppe nach Anspruch 1, wobei das Segment des Längenabschnitts der optischen Fasern innerhalb der Öffnung angeordnet ist, so dass ein nicht gebogener Längenabschnitt der optischen Fasern an der Außenseite der Öffnung minimiert wird.

19. Baugruppe nach Anspruch 18, wobei ein Biegeradius des Längenabschnitts der optischen Fasern an der Außenseite der Öffnung etwa 25 mm (1,0 Inch) ist.

20. Baugruppe nach Anspruch 18, wobei der nicht gebogene Längenabschnitt der optischen Fasern an der Außenseite der Öffnung etwa 2,5 mm (0,1 Inch) ist.

21. Baugruppe nach Anspruch 1, wobei der Längenabschnitt der optischen Fasern einen Querschnitt aufweist, der aus der Gruppe bestehend aus Ovalen, Ellipsen und Rechtecken ausgewählt ist.

22. Verfahren zum Durchführen eines Längenabschnittes von optischen Fasern (202) durch eine Wand einer Baugruppe (600) mit
Vorsehen von zumindest einer innerhalb der Baugruppe (600) angeordneten optischen Komponente (312), an der ein Ende des Längenabschnittes der optischen Fasern (202) befestigt werden soll, welche Komponente (312) eine Ebene definiert, wobei die optischen Fasern als ein Band (304), das eine Breite größer als seine Dicke aufweist, gruppiert sind, und,
Durchführen des Längenabschnittes der optischen Fasern (202) durch eine Öffnung (320), die in einer Wand der Baugruppe definiert ist, so dass eine durch die Breite eines Segments des Längenabschnittes des Bandes (304), das innerhalb der Öffnung (320) angeordnet ist, definierte Ebene im Wesentlichen senkrecht zu der durch die Komponente (312) definierten Ebene ist, **dadurch gekennzeichnet, dass**
die Wand der Baugruppe (600) im Wesentlichen senkrecht zu der durch die Komponente (312) definierten Ebene ist.

23. Verfahren nach Anspruch 22, ferner mit Befestigen des Längenabschnittes der optischen Fasern an der Baugruppe.

24. Verfahren nach Anspruch 23, wobei das Befestigen des Längenabschnittes der optischen Fasern an der Baugruppe Klemmen des Längenabschnittes zwischen zumindest zwei Klemmbauteilen aufweist.

25. Verfahren nach Anspruch 24, wobei die Klemmbauteile eine Form aufweisen, die aus der Gruppe bestehend aus flachen Oberflächen und gebogenen Oberflächen gewählt ist.

26. Verfahren nach Anspruch 22, ferner mit Dichten einer Fuge, die zwischen der Öffnung und dem Segment des Längenabschnittes definiert ist.

27. Verfahren nach Anspruch 26, wobei die Fuge mit einem Klebstoff gedichtet wird, der aus der Gruppe bestehend aus Anhydridepoxid, Epoxid, Silicongummi, Polymerklebstoff und Lötmittel gewählt ist.

28. Verfahren nach Anspruch 22, ferner mit Befestigen des Segments des Längenabschnittes an einer Aussteifungsplatte vor dem Durchführen des Längenabschnittes der optischen Fasern durch die Öffnung.

29. Verfahren nach Anspruch 28, wobei die Aussteifungsplatte ein Material aufweist, das aus der Gruppe bestehend aus Kovar, Invar und Legierung 42 gewählt ist.

30. Verfahren nach Anspruch 22, ferner mit
Halten des Segments des Längenabschnittes mit zumindest einer Durchführung (318), die innerhalb der Öffnung angeordnet ist, und
Verfüllten eines in der Durchführung definierten Hohlraums mit einem Klebstoff.

31. Verfahren nach Anspruch 30, ferner mit Aushärten des Klebstoffes.

32. Verfahren nach Anspruch 22, ferner mit Biegen eines Teiles des Längenabschnittes der optischen Fasern an der Außenseite der Öffnung, so dass der Teil des Längenabschnittes zwischen dem gebogenem Teil und der Öffnung minimiert wird.

33. Verfahren nach Anspruch 32, wobei ein Biegeradius des gebogenen Teils etwa 25 mm (1,0 Inch) ist.

34. Verfahren nach Anspruch 32, wobei der Längenabschnitt der optischen Fasern zwischen dem gebogenen Teil und der Öffnung etwa 2,5 mm (0,1 Inch) ist.

35. Verfahren nach Anspruch 22, wobei der Längenabschnitt der optischen Fasern einen Querschnitt aufweist, der aus der Gruppe bestehend aus Ovalen, Ellipsen und Rechtecken gewählt ist.

## Revendications

1. Boîtier optique (600) ayant une longueur de fibres optiques (202) connectée au boîtier, comprenant :
une enceinte (506) ayant au moins un composant optique (312) disposé à l'intérieur de celle-ci, le composant (312) définissant un plan et étant optiquement connecté à la longueur de fibres optiques (202) ;
une ouverture (320) définie par au moins une paroi de l'enceinte,
dans lequel les fibres optiques (202) sont regroupées sous la forme d'un ruban (304) ayant une largeur plus grande qu'une épaisseur, et un segment de la longueur de ruban est disposé à l'intérieur de l'ouverture (320) de telle sorte qu'un plan défini par la largeur du segment du ruban (304) est sensiblement perpendiculaire au plan défini par le composant (312) ; **caractérisé en ce que :**
la paroi définit un plan qui est sensiblement perpendiculaire au plan défini par le composant optique (312).

2. Boîtier selon la revendication 1 dans lequel l'enceinte comprend une base de montage qui définit un plan de telle sorte que le plan défini par le segment soit perpendiculaire au plan défini par la base de montage.

3. Boîtier selon la revendication 1 comprenant en outre un support (314, 316) fixé sur l'enceinte et agencé pour supporter le segment de la longueur.

4. Boîtier selon la revendication 3 dans lequel le support (314, 316) comprend une bride ayant une face de serrage qui est parallèle au segment de la longueur.

5. Boîtier selon la revendication 4 dans lequel une forme de la face de serrage est sélectionnée parmi le groupe constitué des surfaces plates et des surfaces courbes.

6. Boîtier selon la revendication 4 dans lequel la bride comprend en outre un matériau souple disposé sur la face de serrage.

7. Boîtier selon la revendication 6 dans lequel le matériau souple comprend du caoutchouc.

8. Boîtier selon la revendication 7 dans lequel le matériau souple comprend une épaisseur d'environ 0,76 mm (0,030 pouce).

9. Boîtier selon la revendication 1 comprenant en outre une conduite (318) disposée dans l'ouverture et supportant le segment de la longueur.

10. Boîtier selon la revendication 9 dans lequel la conduite (318) comprend un matériau sélectionné parmi le groupe constitué de l'aluminium, des alliages d'aluminium et des autres métaux.

11. Boîtier selon la revendication 9 comprenant en outre un coffre protecteur (322) disposé sur la conduite.

12. Boîtier selon la revendication 11 dans lequel le coffre protecteur (322) comprend un polymère sélectionné parmi le groupe constitué des polymères thermodurcis et thermoplastiques.

13. Boîtier selon la revendication 11 dans lequel le boîtier protecteur (322) comprend un polymère sélectionné parmi le groupe constitué du santoprène, du néoprène et d'éthylène-propylène-diène monomère.

14. Boîtier selon la revendication 1 comprenant en outre un matériau d'étanchéité disposé dans un espace défini par l'ouverture et le segment de la longueur.

15. Boîtier selon la revendication 14 dans lequel le matériau d'étanchéité comprend un adhésif sélectionné parmi le groupe constitué de l'époxyde anhydride, de l'époxyde, du caoutchouc silicone, des adhésifs polymères et des brasures.

16. Boîtier selon la revendication 1 comprenant en outre une plaque disposée dans l'ouverture et sur laquelle est fixé le segment de la longueur.

17. Boîtier selon la revendication 16 dans lequel la plaque et le segment de la longueur sont soudés ensemble.

18. Boîtier selon la revendication 1 dans lequel le segment de la longueur de fibres optiques est disposé dans l'ouverture de telle sorte qu'une longueur non courbée des fibres optiques à l'extérieur de l'ouverture soit minimisée.

19. Boîtier selon la revendication 18 dans lequel un rayon de courbure de la longueur de fibres optiques à l'extérieur de l'ouverture est d'environ 25 mm (1,0 pouce).

20. Boîtier selon la revendication 18 dans lequel la longueur non courbée des fibres optiques à l'extérieur de l'ouverture est de 2,5 mm (0,1 pouce).

21. Boîtier selon la revendication 1 dans lequel la longueur de fibres optiques a une section transversale sélectionnée parmi le groupe constitué des ovales, des ellipses et des rectangles.

22. Procédé pour faire passer une longueur de fibres optiques (202) à travers une paroi d'un boîtier (600), comprenant les étapes :
fournir au moins un composant optique (312) disposé à l'intérieur du boîtier (600) auquel une extrémité de la longueur de fibres optiques (202) doit être connectée, le composant (312) définissant un plan, dans lequel les fibres optiques sont regroupées sous la forme d'un ruban (304) ayant une largeur plus grande que son épaisseur ; et,
faire passer la longueur de fibres optiques (202) à travers une ouverture (320) définie dans une paroi du boîtier de telle sorte qu'un plan défini par la largeur d'un segment de la longueur du ruban (304) disposé dans l'ouverture (320) soit sensiblement perpendiculaire au plan défini par le composant (312), **caractérisé en ce que** la paroi du boîtier (600) est sensiblement perpendiculaire au plan défini par le composant (312).

23. Procédé selon la revendication 22 comprenant en outre la fixation de la longueur de fibres optiques sur le boîtier.

24. Procédé selon la revendication 23 dans lequel la fixation de la longueur de fibres optiques sur le boîtier comprend le serrage de la longueur entre au moins deux éléments de serrage.

25. Procédé selon la revendication 24 dans lequel les éléments de serrage comprennent une forme sélectionnée parmi le groupe constitué des surfaces plates et des surfaces courbes.

26. Procédé selon la revendication 22 comprenant en outre l'étanchéification d'un espace défini entre l'ouverture et le segment de la longueur.

27. Procédé selon la revendication 26 dans lequel l'espace est rendu étanche à l'aide d'un adhésif sélectionné parmi le groupe constitué de l'époxyde anhydride, de l'époxyde, du caoutchouc silicone, des adhésifs polymères et des brasures.

28. Procédé selon la revendication 22 comprenant en outre la fixation du segment de la longueur sur une plaque de renforcement avant de faire passer la longueur de fibres optiques à travers l'ouverture.

29. Procédé selon la revendication 28 dans lequel la plaque de renforcement comprend un matériau sélectionné parmi le groupe constitué du Kovar, de l'Invar et de l'Alloy 42.

30. Procédé selon la revendication 22 comprenant en outre les étapes :
supporter le segment de la longueur avec au moins une conduite (318) disposée dans l'ouverture ; et
remplir une cavité définie dans la conduite à l'aide d'un adhésif.

31. Procédé selon la revendication 30 comprenant en outre le durcissement de l'adhésif.

32. Procédé selon la revendication 22 comprenant en outre la courbure d'une partie de la longueur de fibres optiques à l'extérieur de l'ouverture de telle sorte que la partie de la longueur entre la partie courbée et l'ouverture soit minimisée.

33. Procédé selon la revendication 32 dans lequel un rayon de courbure de la partie courbée est d'environ 25 mm (1, 0 pouce).

34. Procédé selon la revendication 32 dans lequel la longueur des fibres optiques entre la partie courbée et l'ouverture est d'environ 2,5 mm (0,1 pouce).

35. Procédé selon la revendication 22 dans lequel la longueur de fibres optiques a une section transversale sélectionnée parmi le groupe constitué des ovales, des ellipses et des rectangles.
